# EUROPEAN PATENT APPLICATION

(11) **EP 4 779 253 A1**
(43) Date of publication of application: **22.07.2026**
(21) Application number: 25161313.9
(22) Date of filing: 03.03.2025
(51) Int. Cl.: F41A 21/30, F16B 39/26

(54) **BLAST BAFFLE WITH INSERT FOR A FIREARM SUPPRESSOR**

(30) Priority: 17.01.2025 US 202563746549 P
(71) Applicant: B&T AG, 3608 Thun (CH); B&T USA, LLC, Tampa, Florida 33610 (US)
(72) Inventor: BRÜGGER, Karl, 3608 Thun (CH); SULLIVAN, Sean, Gambrills, 21054 (US)
(74) Representative: Patentsmith SA

(57) **Abstract**

A blast baffle for a firearm suppressor is disclosed. The blast baffle including a principal portion; a tubular boss provided at an inner zone of said principal portion and defining a shoulder, said tubular boss being provided with a female thread; an insert provided with a projectile passage surrounding an axis, a mounting portion extending into said tubular boss and provided with a male thread, and a main portion extending in an opposite direction to said mounting portion, said male thread mating with said female thread; wherein a first of said tubular boss and said insert further comprises at least one locking tab extending into a locking groove provided in a second of said tubular boss and said insert.

## Description

### TECHNICAL FIELD

The present invention relates to the field of firearm accessories. More particularly, it relates to a blast baffle for a firearm suppressor, provided with an insert.

### STATE OF THE ART

Firearm sound suppressors have existed since the late 19th century, and typically comprise an outer casing of tubular form, adapted to be attached at the muzzle of a firearm, defining a passage aligned with the bore axis to allow the projectile to pass through and exit the suppressor. In its simplest form, as disclosed in CH5755, the outer casing defines a single expansion chamber for allowing the propellant gases to expand and reduce their pressure before exiting to the atmosphere, reducing the intensity of the sound report produced as the relatively high-pressure gases leaving the muzzle exit into the relatively low-pressure atmosphere.

From this simple basis, a great variety of more effective suppressors have been developed over the years, typically dividing the inner space within the casing into multiple compartments, in order to slow the expansion of the propellant gases by disrupting their flow and/or forcing the flow to change direction with one or more of baffles, swirl chambers, spiral diffusers, and so on.

Recently, lightweight materials such as aluminum and titanium have become common for manufacturing suppressors, in order to reduce the overall weight. Titanium in particular has become favored in centrefire rifle cartridge applications where the temperature, volume and pressure of propellant gases leaving the firearm's muzzle are relatively elevated, particularly in high volume-of-fire applications, since it has exceptional tensile strength and the baffles can be relatively thin as a result, whereas aluminum is typically limited to low rate-of-fire centrefire (e.g. hunting / precision shooting) roles, and low-pressure roles such as rimfire calibers (e.g. .22lr), pistol calibers (e.g. 9x19mm) and subsonic rifle calibers (e.g. subsonic loadings of 300 AAC BLK). Furthermore, both titanium and aluminum alloys are particularly suited for additive manufacturing (i.e. 3D printing), e.g. by selective laser sintering, selective laser melting or similar, which enables production of very complicated shapes.

However, such materials have the drawback that, compared to materials such as steels and Inconel (a nickel-chromium-based superalloy often utilized in extreme environments), they are relatively easily eroded by the heat, pressure and particulate matter of the propellant gases. This is particularly prevalent at the blast baffle, which is the nearest baffle to the firearm's muzzle, and is hence subjected to the harshest erosive conditions upon discharge of the firearm.

One solution to this issue is to make the blast baffle, and in particular its central portion, extremely thick, in order to be able to absorb a significant amount of wear before needing replacement. This requires a significant amount of material, and slows manufacture when the baffle is additively-manufactured.

US9921020, US8910745 and US8991552 disclose variants of suppressors in which the blast baffle is provided with a separate flanged insert which is screwed or otherwise fixed into an opening provided in the blast baffle, and absorbs much of the wear caused by the propellant gases. This enables the use of a different material for the insert, which can be manufactured separately and easily either by conventional manufacturing (e.g. CNC machining, casting, metal injection moulding etc.) or additive manufacturing. As a result, a relatively thick insert of more resistant material can be fixed into a relatively thin and hence light blast baffle of a less resistant material.

However, in practice, the different thermal expansion coefficients between the material of the insert and the material of the baffle, together with the forces, vibrations etc. to which the blast baffle and the insert are subjected in use, often result in the insert coming loose and potentially even detaching.

The obvious solutions of drilling an offset hole through the flange of the insert and the underlying portion of the blast baffle, followed by either pinning or drilling and tapping for a set screw, add extra manufacturing steps. In the case of a 3D-printed suppressor with integral blast baffle, this requires drilling a relatively small offset hole through two relatively hard materials with a relatively long drill bit in order to reach within the housing of the suppressor, leading to a high risk of drill chatter, the bit being displaced, and the hole not being drilled in the correct location, potentially leading to an unacceptably high rejection rate at a very late stage in the manufacturing process.

US2024068763 discloses a solution featuring a monobloc blast baffle additively manufactured from two different materials. To address differences in thermal expansion coefficients, a relief slot is incorporated. However, the interface between the two materials lacks sufficient strength, increasing the risk of breakage. Additionally, the central portion's thickness is constrained by the limitations of dual-material additive manufacturing. This configuration appears restricted to separately-produced blast baffles and is unsuitable for integrated 3D-printed constructions, as it requires two materials to be situated in the same plane during fabrication.

A further issue, particularly with titanium, is its susceptibility to sparking when struck by metallic particles in the propellant gases. These particles, often originating from bullet jacket material sloughing off projectiles, create problems in low-light conditions by impairing night vision, overloading night vision devices, and revealing the user's location.

The aim of the invention is hence to propose a blast baffle for a firearm suppressor in which the above-mentioned disadvantages are at least partially mitigated, together with a method of manufacture thereof.

### DISCLOSURE OF THE INVENTION

More precisely, the invention relates to a blast baffle for a firearm suppressor, which may be a separate blast baffle adapted to be welded, threaded, bonded, brazed, crimped, press-fitted, pinned, encapsulated or otherwise attached within a suppressor, or may be partially integrally-formed therewith. This blast baffle includes a principal portion, which may for example be conical or planar (e.g. annular); a tubular boss provided at an inner zone of said principal portion and defining a shoulder (either external or internal to the tubular boss, depending on the configuration), said tubular boss being provided with a female thread on an inside wall thereof; and an insert, which may be made of the same material as the principal portion and the tubular boss, or may be made of a different material, said insert being provided with a projectile passage surrounding an axis A, a mounting portion extending into said tubular boss and provided with a male thread, and a main portion extending in an opposite direction to said mounting portion (considered parallel to axis A), said male thread mating with said female thread.

According to the invention, a first of said tubular boss and said insert further includes at least one locking tab extending into a locking groove provided in a second of said tubular boss and said insert. In other words, either the tubular boss includes at least one locking tab extending into a locking groove in the insert, or the insert includes at least one locking tab extending into a groove provided in the inside wall of the tubular boss.

As a result, the cooperation between the locking tab and the locking groove serves to lock the insert to the tubular boss, such that the insert cannot unscrew under shock, vibration or stresses due to differential thermal expansion, without recourse to additional locking elements such as pins, set screws or similar.

Advantageously, said insert includes a radially-extended flange extending radially with respect to axis A and in contact with said shoulder, said mounting portion extending from said flange. It should be noted that the outer diameter of the main portion may be less than that of the flange, or it may be the same as that of the flange in which case the flange extends axially to form the main portion. Furthermore, in such a case, the locking tab typically extends from the shoulder.

Advantageously, said locking groove is provided at a corner between said flange and said mounting portion, and may have an asymmetric V-shaped cross-section.

In an alternative configuration, the flange is optional, and said shoulder is provided within the tubular boss, with the insert being in contact therewith. In such a case, the at least one locking tab is advantageously provided on the insert, and hence extends into a locking groove provided in the inside wall of the tubular boss, e.g. at the corner of the shoulder.

Advantageously, said at least one locking tab extends to the bottom of said locking groove.

Advantageously, said principal portion and said tubular boss are made of titanium or aluminum, whereas said insert is made of steel or Inconel. This combines the light weight of aluminum and titanium with the wear resistance and low sparking of steel or Inconel.

Advantageously, one or both of the flange and the main portion of the insert may include features which are of non-circular cross-section, such as e.g. polygonal forms, slots, grooves, star-forms, crenelations or a pattern of pinholes, enabling interaction with a conventional tool to aid in installation of said insert on said tubular boss.

When integrated into a firearm suppressor, said principal portion and said tubular boss may be integrally formed with an outer housing of said suppressor, e.g. by being integrally additively manufactured (i.e. 3D printed) therewith.

The invention also relates to a method of assembling a blast baffle as defined above, this method including steps of providing said principal portion, said tubular boss, and said insert, a first of said tubular boss and said insert including said at least one locking tab in an initial configuration arranged to permit passage of said mounting portion into said tubular boss, i.e. not fouling the entry of the male thread into the female thread and/or not preventing the insert from being screwed fully home; screwing said insert into said tubular boss so as to cause said at least one locking tab to be bent so as to extend into said locking groove, thereby adopting the configuration defined above.

For example, in said initial configuration, said at least one locking tab may extend obliquely from a shoulder of said tubular boss towards said axis A and towards said insert when it is partially screwed into said tubular boss, the end face of said flange hence folding the at least one locking tab into said locking groove as the insert is screwed home. In the configuration in which the at least one locking tab is provided on the insert, this tab may e.g. extend obliquely away from said axis A towards a shoulder provided within said tubular boss, so as to cooperate with this shoulder so as to cause the at least one locking tab to be folded into the locking groove provided in the tubular boss when the insert is screwed home.

### BRIEF DESCRIPTION OF THE DRAWINGS

Further details of the invention will become more apparent upon reading the detailed description in reference to the appended figures, which illustrate:
Figure 1: a longitudinal cutaway view of a firearm suppressor including a blast baffle according to the invention;
Figure 2: three cutaway detail views of a blast baffle according to the invention, at three stages of assembly;
Figure 3: a zoomed-in detail view of a part of drawing a of Figure 2; and
Figure 4: a zoomed-in detail view of a part of drawing c of Figure 2.

### EMBODIMENTS OF THE INVENTION

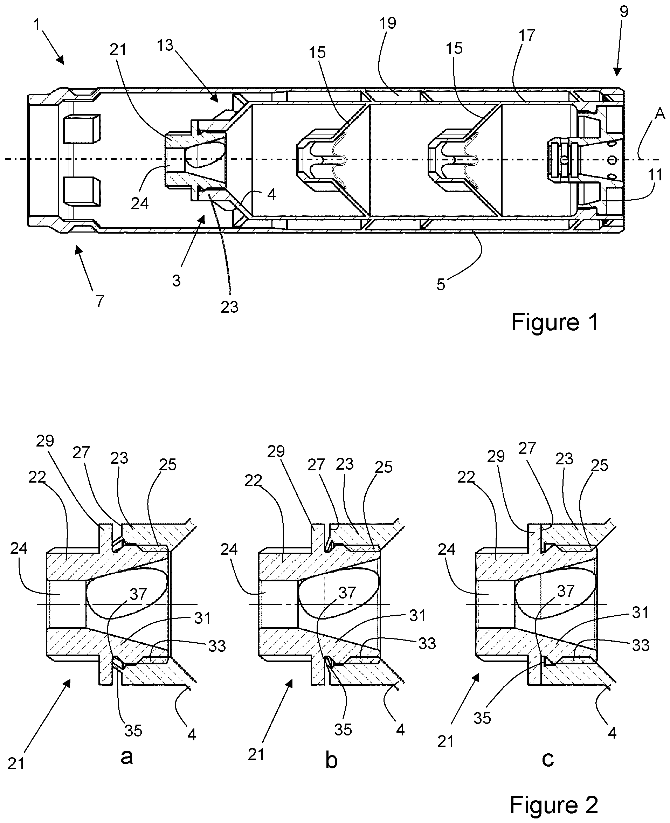

Figure 1 illustrates a nonlimiting example of a firearm suppressor 1 in which a blast baffle 3 according to the invention is integrated. As is generally known, a firearm suppressor 1 has an outer casing 5, of generally tubular form, with a conveniently-shaped cross-section such as a circular, oval, polygonal or similar cross-section, extending from a first extremity 7 to a second extremity 9. First extremity 7 is the proximal extremity of the suppressor 1 and is adapted to be attached to a muzzle of a firearm (not illustrated) such as a rifle, shotgun, carbine or similar by a convenient adapter (not illustrated) such as a threaded, quick-detach or other convenient adapter, whereas second extremity 9 is the distal extremity of the suppressor 1 and is provided with an end cap 11, which may be integrally-formed with the outer casing 5, or may be a separate part attached thereto e.g. by threading, screwing, pinning, welding or similar.

Within said outer casing 5 is provided a core 13 including a plurality of baffles 3, 15, of which the baffle closest to the first extremity 7 is the blast baffle 3. The subsequent baffles 15, of which two are illustrated but the number may be chosen at will and is typically between 1 and 10, are situated between the blast baffle 3 and the end cap 11. In the illustrated embodiment, subsequent baffles 15 are of the so-called "star baffle" type, but any convenient type may be used, and as a result it is not necessary to describe them in detail. As illustrated, all the baffles 3, 15 are generally conical in form, the apex of their conical forms being directed towards said first extremity as is generally known. However, the blast baffle 3 may also be of classic, annular form, and also the subsequent baffles 15 may be of conventional, annular shape, conical shape or any other convenient shape.

In the illustrated embodiment, the core 13 defines an inner casing 17, separated from the outer casing 5 by a bypass chamber 19, which provides a fluidic pathway for a portion of the propellant gases to pass around the core 13 and exit at the end cap upon discharge. This arrangement known as a "bypass" or "reduced backpressure" arrangement, and the inner casing 17 may be perforated or not. However, the invention is not limited to a bypass-type suppressor, and the core 13 may simply be provided directly within the outer casing 5 in a conventional, non-bypass setup.

The core 13, and in particular its baffles 3, 15, defines a projectile pathway centered on axis A, and to this end each of the baffles 3, 15 is provided with an opening situated on said projectile pathway and adapted to permit the passage of a projectile. It should be noted that although projectile pathway is coaxial with the outer casing 5 in the illustrated embodiment, offset arrangements are also known in the art and the invention is not to be construed as being limited to a coaxial arrangement.

At least a portion of blast baffle 3 and/or subsequent baffles 15 may be at least partially integrally formed with the inner casing 17 and/or outer casing 5, e.g. by additive manufacturing (i.e. 3D printing), such as by selective laser sintering, selective laser melting or similar, of a metal such as aluminum, titanium, steel, Inconel or similar materials.

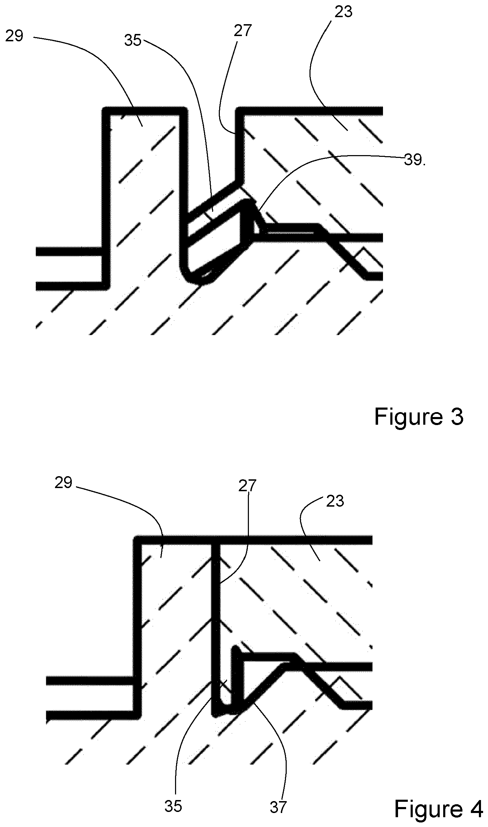

Blast baffle 3 includes a principal portion 4, which is generally conical in the illustrated embodiment, upon which an insert 21 is mounted via a tubular boss 23, and will be further described in reference to Figures 2c and 4. In order to avoid overloading Figure 1, many reference signs relating to the details of the insert 21 and parts of the blast baffle are only reproduced on Figures 2a-2c, 3 and 4. As is generally known, insert 21 includes a projectile passageway 24 for the passage of a projectile, a main portion 22 extending towards said first extremity 7, which is configured so as to survive the erosive action of the propellant gases for a predetermined lifetime of the suppressor 1, and as a result is relatively thick and long. As noted in the introduction, the insert 21 may be made of the same material or a different material to the remainder of the blast baffle 3 (i.e. the principal portion 4 and the tubular boss 23). An Inconel insert 21 in combination with a titanium blast baffle 3 is preferred due to the erosion resistance and the relatively low sparking qualities of Inconel, attributed to its low iron content. This characteristic, combined with the relatively low weight and high tensile strength of the titanium for the blast baffle 3, makes the combination particularly advantageous. Additionally, in such a situation, end cap 11 may also be made of a low-sparking material such as Inconel, benefiting from its low-iron composition to further minimize sparking. Projectile passageway 24 may take any convenient form, but in the illustrated embodiment it includes a straight-sided portion leading to a conical opening provided with an optional notch. However, this is not critical to the present invention and need not be described in detail.

In order to mount the insert 21 on the blast baffle 3, tubular boss 23 is provided on an inner zone of the principal portion 4, extending towards the first extremity 5, parallel to axis A. Tubular boss 23 includes a female thread 25 on its interior surface, and defines a shoulder 27 extending in a plane perpendicular to axis A and against which a radially-extending flange 29 of said insert 21 is positioned. Flange 29 extends radially with respect to axis A beyond a mounting portion 31, which is generally tubular in form, of insert 21. Mounting portion 31 extends into said tubular boss 23, and is provided with a male thread 33 that mates with female thread 25. In order to simplify assembly of the insert 21 when screwing it into the tubular boss 23, the main portion 22 of the insert 21 and/or the flange 29 may have a polygonal, crenelated, star-shaped, patterns of pinholes, grooves, slots or other convenient non-circular outer cross-section, in order to enable it to be manipulated and installed with a tool such as a socket wrench or custom tool, even if the blast baffle 23 is already installed in, or integrally-formed with, the suppressor 1. It should also be noted that the main portion 22 and the flange 29 may be of the same outer contour, such that the flange 29 extends axially parallel to axis A such that it also constitutes the main portion 22.

In order to prevent the insert 21 from unscrewing under the effects of heat, shock, vibration etc. when the suppressor 1 is in use, at least one locking tab 35 provided on the tubular boss 23 extends inwardly, into a circumferential locking groove 37 provided in the mounting portion 31 of the insert 21. This locking groove 37 is preferably positioned at the inside corner between the mounting portion 31 and the flange 29, extending at least partially radially. Locking tab 35 is integrally-formed with the tubular boss 23, and may extend around the entire circumference of the tubular boss 23 may be segmented, or may only be provided in a predetermined number of discrete positions, such as in two, three, four, five or six suitable locations.

As will be clear from Figure 2c, it is not possible to manufacture the at least one locking tab 35 in its final position, and then screw the insert 21 into the tubular boss 23, because the at least one locking tab 35 would interfere with, and indeed entirely prevent, the passage of the mounting portion 31. How this final position is achieved is illustrated on Figures 2a and 2b, which illustrate how the locking tab 35 is initially configured, and how it is bent into the locking groove 37 when the insert 21 is screwed into the tubular boss 23.

As can be seen from Figure 2a, and in more detail on Figure 3, the at least one locking tab 35 is in an initial configuration, arranged such that it extends obliquely, towards both the first extremity 7 and axis A. In the case in which locking tab 35 extends around the entirety of the shoulder, it hence has a hollow tronconical shape.

Locking tab 35 has a predetermined thickness such that it can undergo plastic deformation without breaking, enabling it to be bent into locking groove 37 and secure the insert 21 to the tubular boss 23. Furthermore, in order to ensure that the shoulder 27 is flat once the locking tab 35 has been bent into its final position, the locking tab extends from the shoulder at a position slightly removed from the inner corner thereof, and a recess 39 is provided between the root of the locking tab 35 and the surface of the tubular boss 23 and sized such that the locking tab 35 can be bent thereinto without protruding above the surface of the remainder of the shoulder 27. Indeed, the root of the locking tab 35 is located approximately one third of the distance between the inner and outer edges of the tubular boss 23. The exact length of each locking tab 35 may be selected to balance the stress required to provide a secure locking action while still allowing the insert 21 to be turned with a tool during installation of the insert 21. This length should not be so great as to induce strain exceeding the material's yield strength, which could cause permanent deformation or breakage. A solution observing these conditions can easily be found by modelling and/or routine experimentation.

In order to permit the insert 21 to pass the extremity of the at least one locking tab 35, this latter is situated no closer to the axis A than the widest part of the mounting portion 31 of the insert 21 in its initial position.

In the situation illustrated on Figures 2a and 3, the flange 29 has just entered into contact with the extremity of the at least one locking tab 35, this latter either having a free extremity configured to correspond to the surface of the flange 29 with which is cooperates, or a rounded extremity.

In Figure 2b, the insert 21 has been further screwed into the tubular boss 23, and has hence been partially bent towards its final position, by camming action between the face of the flange 29 and the locking tab 35.

In Figures 2c and 4, the final position of the at least one locking tab 35 in the locking groove 37 is illustrated. In this position, the surface of the locking tab 35 which is in contact with the flange 29 is in substantially the same plane as the shoulder 27, and forms the prolongation of this latter, and the free extremity of the at least one locking tab 25 extends towards axis A, inside the locking groove 37.

Residual stress in the at least one locking tab 35 pushing the insert 21 towards the first extremity 7, as well interaction between the at least one locking tab 35 and the locking groove 37, serve to solidly lock the insert 21 and the tubular boss 23 together, preventing unscrewing and preventing the insert 21 from becoming loose or being lost. The exact shape of the locking groove 37 can be chosen at will in order to provide sufficient retention, and it should be noted that the illustrated arrangement in which the extremity of the at least one locking tab 35 substantially reaches the bottom of an asymmetric V-shaped locking groove 37, with one wall being the prolongation of the corresponding face of flange 29, and the other wall extending obliquely thereto at an angle of between 30° and 60°, has proven to be particularly effective.

It should also be noted that the exact configuration of locking tab 35 and locking groove 37 are not limiting, and other configurations in which the above-described functionality are reproduced are also possible. For example, the final position of the locking tab 35 does not have to be perpendicular to axis A, and the wall of the locking groove 37 may be curved, scalloped or similar. Also, the locking tab 35 may extend from a different part of the shoulder 27, e.g. the interior corner thereof, and the locking groove 37 may be at a different angle.

In an alternative, non-illustrated embodiment, flange 29 is optional, and the insert 21 may bottom-out against an annular shoulder provided within the tubular boss 23. In such a case, a locking groove is provided in the inside wall of the tubular boss 23, e.g. adjacent to this shoulder, and the at least one locking tab is provided on the insert 21, extending obliquely from an end face of the insert 21 so as not to get caught on the female thread of the tubular boss 23 during insertion. Camming action of the at least one locking tab against the shoulder hence causes the at least one locking tab to be bent into the locking groove.

One particular advantage of an arrangement in which the insert 21 carries the at least one locking tab is that, in the case of replacement of the insert 21 due to erosion, ablation, a baffle strike or similar, the locking tabs are also replaced and are hence not subject to fatigue due to repeated bending.

In terms of manufacturing, it is possible to form the principal portion 4 and the tubular boss 23 of the blast baffle 3 by conventional machining, and then affix it in the suppressor 1 by threading, screwing, welding or similar. However, it is particularly suited to additive manufacturing (i.e. 3D printing), particularly by selective laser sintering, selective laser melting or similar, which is capable of forming very precise shapes that are difficult or impossible to create by conventional machining. This approach also has the advantage of being compatible with an integrated construction, where the baffles 3, 15 (with the exception of the insert 21) are integral with the inner casing 15 and/or outer casing 5. Likewise, the end cap 11 may be a separate part, or integrally-formed with the outer casing 5.

Although the invention has been described in terms of specific embodiments, variations thereto are possible without departing from the scope of the appended claims.

## Claims

1. Blast baffle (3) for a firearm suppressor (1) comprising:
- a principal portion (4);
- a tubular boss (23) provided at an inner zone of said principal portion (4) and defining a shoulder (27), said tubular boss (23) being provided with a female thread (25);
- an insert (21) provided with a projectile passage (24) surrounding an axis (A), a mounting portion (31) extending into said tubular boss (23) and provided with a male thread (33), and a main portion (22) extending in an opposite direction to said mounting portion (31), said male thread (33) mating with said female thread (25);
wherein a first of said tubular boss (23) and said insert (21) further comprises at least one locking tab (35) extending into a locking groove (37) provided in a second of said tubular boss (23) and said insert (21).

2. Blast baffle (3) according to the preceding claim, wherein said insert (21) comprises a radially-extending flange (29) extending radially with respect to said axis (A), said flange (29) being in contact with said shoulder, and wherein said mounting portion (31) extends from said flange (29).

3. Blast baffle (3) according to the preceding claim, wherein said locking groove (37) is provided on said insert (21) at a corner between said flange (29) and said mounting portion (31).

4. Blast baffle (3) according to any preceding claim, wherein said at least one locking tab (35) extends from said shoulder (27).

5. Blast baffle (3) according to claim 1, wherein said shoulder extends inwardly from the interior wall of said tubular boss (23), said insert (21) being in contact with said shoulder.

6. Blast baffle (3) according to the preceding claim, wherein said at least one locking tab is provided on said insert (21), and said locking groove is provided in the inside wall of said tubular boss (23).

7. Blast baffle (3) according to any preceding claim, wherein said locking groove (37) is of asymmetric V-shaped cross-section.

8. Blast baffle (3) according to any preceding claim, wherein said at least one locking tab (35) extends to the bottom of said locking groove (37).

9. Blast baffle (3) according to any preceding claim, wherein said principal portion (4) and said tubular boss (23) are made of titanium or aluminium, and wherein said insert (21) is made of steel or Inconel.

10. Blast baffle (3) according to any preceding claim, wherein at least one of said main portion (22) and/or said flange (29) if present, are of non-circular cross-section.

11. Firearm suppressor (1) comprising an outer housing (5) and a blast baffle (3) according to any preceding claim, wherein said principal portion (4) and said tubular boss (23) are integrally formed with said outer housing (5).

12. Method of manufacturing a firearm suppressor (1) according to claim 11, wherein at least said outer housing (5), said principal portion (4) and said tubular boss (23) are integrally manufactured by additive manufacturing.

13. Method of assembling a blast baffle (3) according to one of claims 1-10, comprising steps of:
- providing said insert (21), said principal portion (4) and said tubular boss (23), a first of said tubular boss (23) and said insert (21) comprising said at least one locking tab (35) in an initial configuration arranged to permit passage of said mounting portion (31) into said tubular boss (23);
- screwing said insert (21) into said tubular boss (23) so as to cause said at least one locking tab (35) to bend so as to extend into said locking groove (37).

14. Method according to the preceding claim, wherein, in said initial configuration, said at least one locking tab (35) extends obliquely from a shoulder (27) of said tubular boss (23) towards said axis (A) and towards said insert (21) when said insert (21) is partially screwed into said tubular boss (23).

15. Method according to claim 13, wherein, in said initial configuration, said at least one locking tab extends obliquely from said insert away from said axis (A) and towards a shoulder provided within said tubular boss (23), when said insert is partially screwed into said tubular boss (23).
